# EUROPEAN PATENT APPLICATION

(11) **EP 1 610 420 A2**
(43) Date of publication of application: **28.12.2005**
(21) Application number: 05012910.5
(22) Date of filing: 15.06.2005
(51) Int. Cl.: H01R 13/453

(54) **Interface connector cover opening and closing apparatus for mobile communication terminals**

(30) Priority: 24.06.2004 KR 2004047698
(71) Applicant: SAMSUNG ELECTRONICS CO., LTD., Suwon-si, Gyeonggi-do (KR)
(72) Inventor: Kim, Jae-Shik, Yeongtong-gu, Suwon-si, Gyeonggi-do (KR); Kim, Hong-Bae, Yeongtong-gu, Suwon-si, Gyeonggi-do (KR)
(74) Representative: Grünecker, Kinkeldey, Stockmair & Schwanhäusser Anwaltssozietät

(57) **Abstract**

Disclosed herein is an interface connector cover opening and closing apparatus for mobile communication terminals that allows easy opening and closing of an interface connector cover mounted to a terminal body of a mobile communication terminal including a cover disposed at a predetermined position of the terminal body, the cover being rotatable about a hinge axis when an external force is applied to the cover such that the cover can be retracted into the inside of the terminal body or returned to its original position, and at least one cover opening and closing unit disposed at the rear of the cover for rotatably connecting the cover to the terminal body and restricting the rotation of the cover.

## Description

### BACKGROUND OF THE INVENTION

### 1. Field of the Invention

The present invention relates to an interface connector cover opening and closing apparatus for mobile communication terminals, and more particularly to an interface connector cover opening and closing apparatus for mobile communication terminals that allows easy opening and closing of an interface connector cover mounted to a terminal body of a mobile communication terminal.

### 2. Description of the Related Art

Generally, mobile communication terminals have been made smaller and are typically provided with multiple functions depending upon the demand of the consuming public. The multiple functions include audio communication, listening to music, downloading and listening to MP3 music from the Internet, and transmitting/receiving text messages through the use of key buttons of the respective mobile communication terminals.

As mobile communication terminals have become increasingly popular, functions and designs of the mobile communication terminals have been diversified. Also, mobile communication terminals have become smaller, slimmer, and lighter. Furthermore, various additional functions of the mobile communication terminals have been required.

Another increasing trend provides a camera lens in each mobile communication terminal to perform video communication. The mobile communication terminal has a camera lens mounted outside or inside a main body of the mobile communication terminal so that a user of the communication terminal can talk with another user of a similar communication terminal while looking at each other, or take pictures of his/her desired subjects.

Each mobile communication terminal has an interface connector to perform data communication between the mobile communication terminal and an external device, such as a computer, to upgrade the mobile communication terminal, and to charge the mobile communication terminal. When not in use, the interface connector is usually covered by a suitable cover, such as a cover made of a rubber, such that foreign substances or dust are not introduced into the mobile communication terminal through the interface connector.

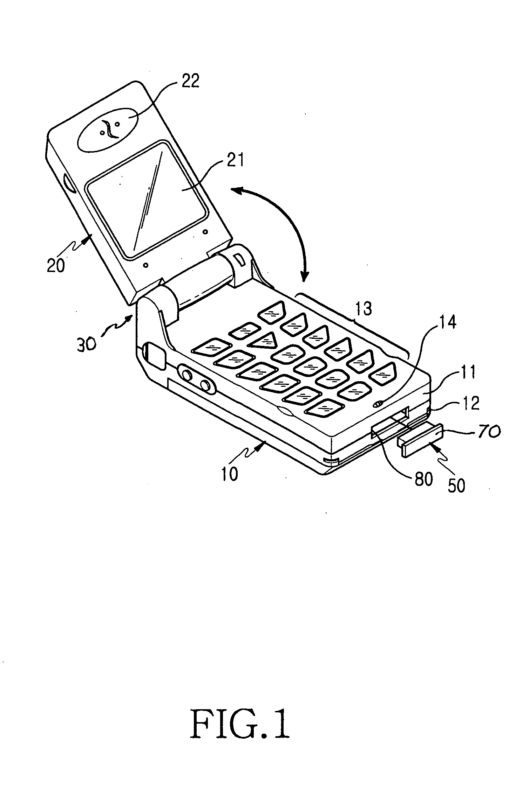

FIG 1 is a perspective view showing a conventional folder-type mobile communication terminal. As shown in FIG. 1, the mobile communication terminal includes a terminal body 10 and a folder part 20. The terminal body 10 is provided with various key buttons 13 and a microphone 14. The folder part 20 is provided with a liquid crystal display unit 21 and a speaker 22. Between the terminal body 10 and the folder part 20 is mounted a hinge apparatus 30 such that the folder part 20 can be rotated relative to the terminal body 10. To the upper end of the terminal body 10 is attached an antenna (not shown).

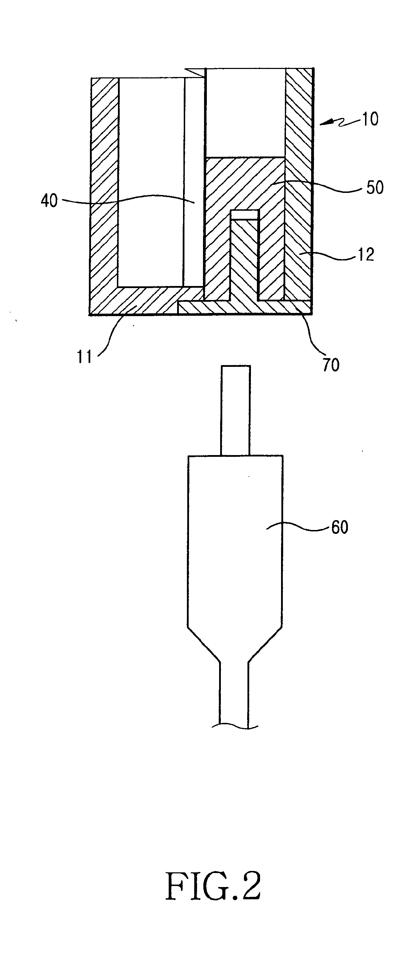

As shown in FIG. 2, the terminal body 10 includes upper and lower case frames 11 and 12. At a predetermined position in the terminal body 10 is mounted a printed circuit board 40, on which an interface connector 50 is disposed while the interface connector 50 is electrically connected to the printed circuit board 40. To the lower end of the terminal body 10 where the interface connector 50 is mounted is detachably attached an interface connector cover 70, made of rubber, to prevent foreign substances or dust from being introduced into the terminal body 10 through the interface connector 50.

The terminal body 10 is also provided at the lower end thereof with a coupling hole 80, through which an external connector 60 is coupled to the interface connector 50. When the interface connector 50 is to be used, it is necessary to detach the interface connector cover 70 from the terminal body 10. After using the interface connector 50, the interface connector cover 70 is again attached to the terminal body 10. This is very troublesome for users. Also, the interface connector cover 70 made of rubber is detachable from the terminal body 10. Consequently, the interface connector cover 70 may be lost when the interface connector cover 70 is detached from the terminal body 10. When the interface connector cover 70 is lost, foreign substances or dust may be easily introduced into the terminal body 10, which may cause the mobile communication terminal to malfunction.

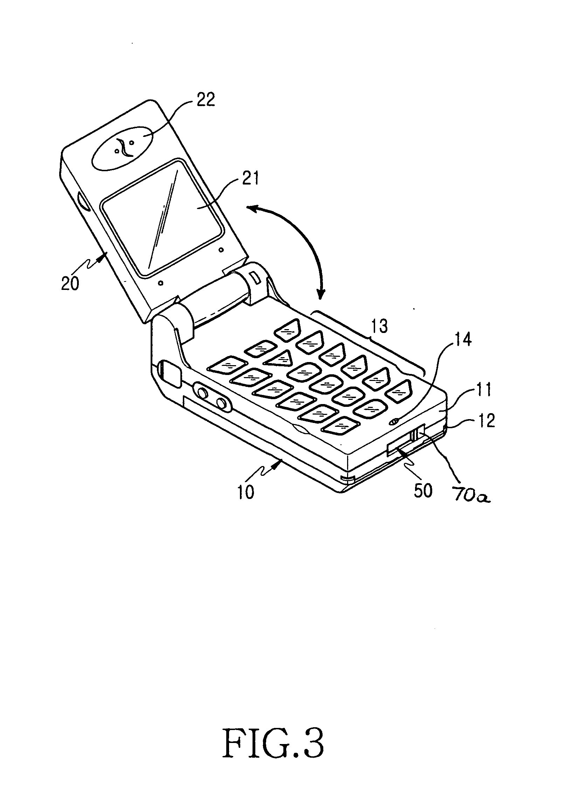

In order to solve the above-mentioned problem, the interface connector cover 70a, which can be slid in the lateral direction of the terminal body 10, may be attached to the lower end of the terminal body 10, as shown in FIG. 3. The interface connector cover 70a is moved in the opening direction while being pushed by a hand of a user when the interface connector 50 is to be used, and the interface connector cover 70a is moved in the closing direction while being pushed after using the interface connector 50. However, the interface connector cover shown in FIG. 3 also has a problem in that the size of the interface connector cover is very small, and thus it is very difficult to open/close the interface connector cover by hand. In brief, the interface connector cover shown in FIG. 3 is very inconvenient to use.

### SUMMARY OF THE INVENTION

Therefore, the present invention has been made in view of the above problem, and it is an object of the present invention to provide an interface connector cover opening and closing apparatus for mobile communication terminals that allows easy rotation of an interface connector cover mounted to a terminal body of a mobile communication terminal.

It is another object of the present invention to provide an interface connector cover opening and closing apparatus for mobile communication terminals that allows rotatable opening and closing of an interface connector cover mounted to a terminal body of a mobile communication terminal, whereby an external connector can be easily coupled to an interface connector of the terminal body, and the interface connector cover is prevented from being lost.

In accordance with the present invention, the above and other objects can be accomplished by an interface connector cover device for a mobile communication terminal with the features of claim 1.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view showing a conventional folder-type mobile communication terminal with a folder part opened;
FIG. 2 is a side view, in section, showing a conventional interface connector cover mounted to the mobile communication terminal;
FIG. 3 is a perspective view showing another conventional interface connector cover mounted to the mobile communication terminal;
FIG. 4 is an exploded perspective view showing the construction of an interface connector cover opening and closing apparatus for mobile communication terminals according to a preferred embodiment of the present invention;
FIG. 5 is an exploded perspective view showing a cover, a side hinge arm and a cover mounting part of the interface connector cover opening and closing apparatus for mobile communication terminals according to the preferred embodiment of the present invention;
FIG. 6 is a perspective view showing the cover of the interface connector cover opening and closing apparatus for mobile communication terminals according to the preferred embodiment of the present invention;
FIG. 7 is a perspective view showing the interface connector cover opening and closing apparatus for mobile communication terminals according to the preferred embodiment of the present invention before the cover is rotated;
FIG. 8 is a perspective view showing the interface connector cover opening and closing apparatus for mobile communication terminals according to the preferred embodiment of the present invention while the cover is rotated;
FIG. 9 is a perspective view showing the interface connector cover opening and closing apparatus for mobile communication terminals according to the preferred embodiment of the present invention after the cover is rotated;
FIG. 10 is a side cross-sectional view showing the interface connector cover opening and closing apparatus for mobile communication terminals according to the preferred embodiment of the present invention before the cover is rotated;
FIG. 11 is a side cross-sectional view showing the interface connector cover opening and closing apparatus for mobile communication terminals according to the preferred embodiment of the present invention while the cover is rotated;
FIG. 12 is a side cross-sectional view showing the interface connector cover opening and closing apparatus for mobile communication terminals according to the preferred embodiment of the present invention after the cover is rotated;
FIG. 13 is a cutaway perspective view showing the interface connector cover opening and closing apparatus for mobile communication terminals according to the preferred embodiment of the present invention, the cover being mounted to the cover mounting part, before the cover is rotated;
FIG. 14 is a cutaway perspective view showing the interface connector cover opening and closing apparatus for mobile communication terminals according to the preferred embodiment of the present invention, the cover being mounted to the cover mounting part, while the cover is rotated; and
FIG. 15 is a cutaway perspective view showing the interface connector cover opening and closing apparatus for mobile communication terminals according to the preferred embodiment of the present invention, the cover being mounted to the cover mounting part, after the cover is rotated.

### DETAILED DESCRIPTION OF THE PREFERRED EMBODIMENTS

Now, a preferred embodiment of the present invention will be described in detail with reference to the accompanying drawings.

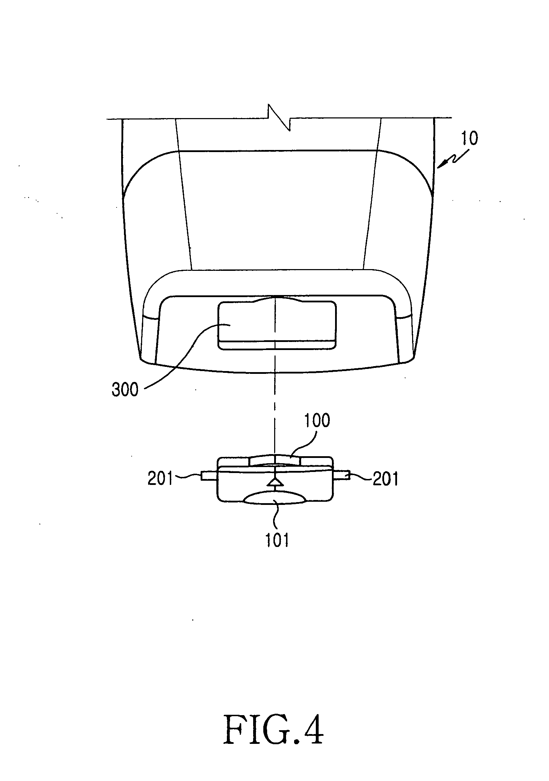

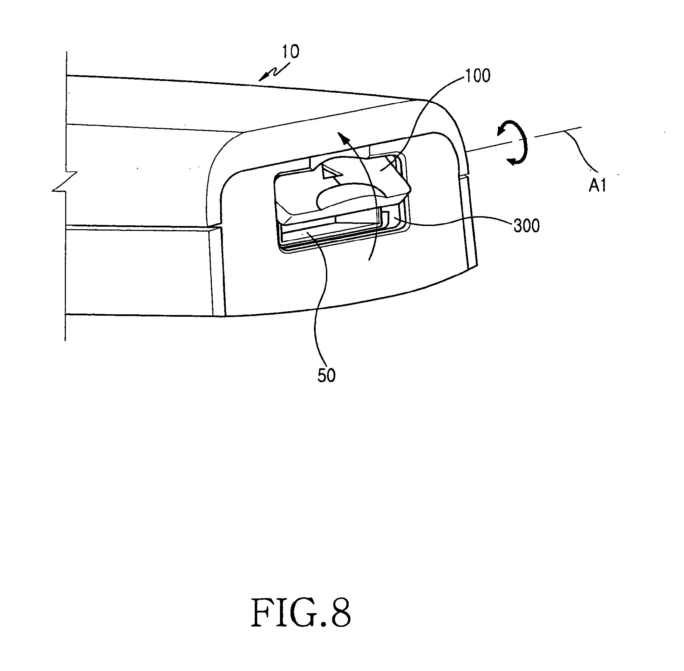

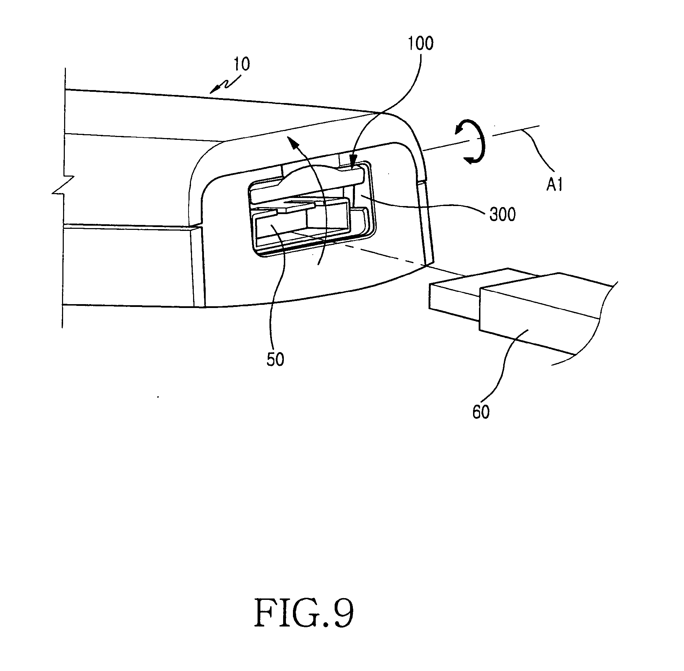

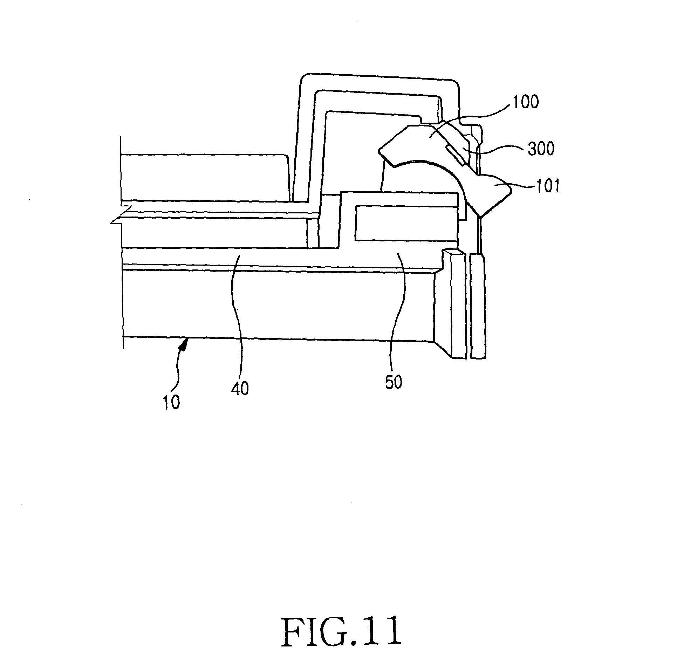

As shown in FIGS. 4 to 15, an interface connector cover opening and closing apparatus for mobile communication terminals includes a mounting hole 300, a cover 100, and at least one cover opening and closing unit. The mounting hole 300 is formed at a predetermined position of the lower end of a terminal body 10 such that the mounting hole 300 is opened or closed by the rotation of the cover 100. The cover 100 is rotatable about a hinge axis A1 of the cover opening and closing unit when an external force is applied to the cover 100 such that the cover 100 can be retracted into the inside of the terminal body 10 and returned to its original position. The cover opening and closing unit has the hinge axis A1. The cover 100 is rotatably connected to the mounting hole 300 by means of the cover opening and closing unit. The cover opening and closing unit is disposed at either side of the rear of the cover 100 such that the opening and closing of the cover 100 is restricted.

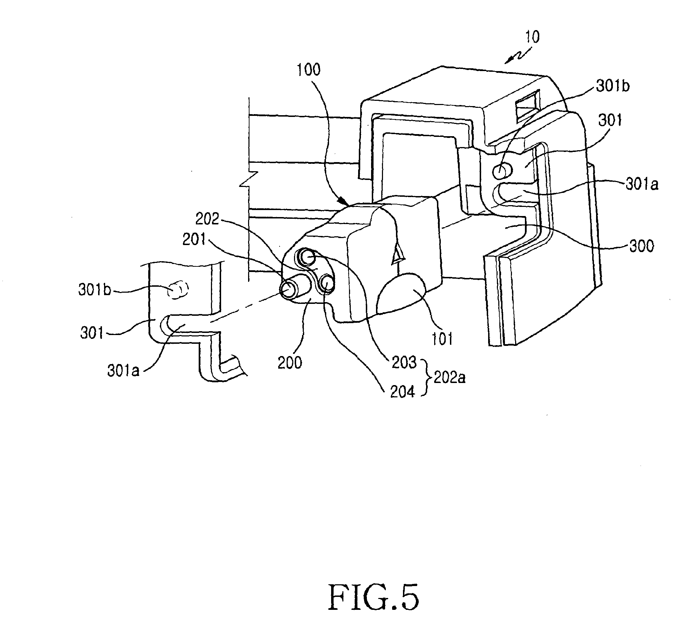

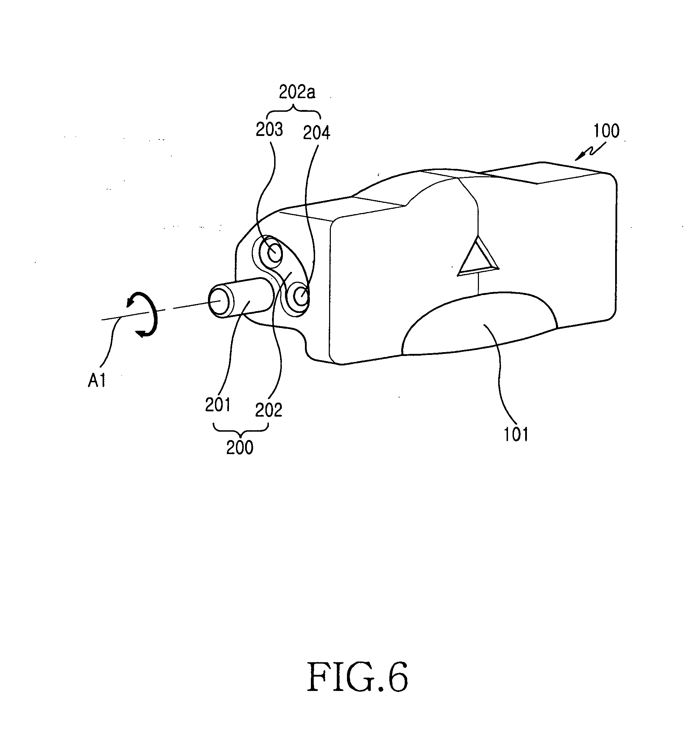

As shown in FIGS. 5 and 6, the cover opening and closing unit includes a cover mounting part 301 and a side hinge arm 200. The cover mounting part 301 is formed at either end of the inside of the mounting hole 300 such that the cover mounting part 301 is rotatably connected to the side hinge arm 200 for guiding the rotation of the cover 100. The side hinge arm 200 is formed at either end of the rear of the cover 100 such that the side hinge arm 200 is rotatably connected to the cover mounting part 301 for restricting the rotation of the cover 100.

As shown in FIG. 5, the cover mounting part 301 has a rotation hole 301 a, through which a hinge protrusion 201 formed at the side hinge arm 200 is rotatably inserted. Adjacent to the rotation hole 301 a is formed a guide protrusion 301 b to guide the rotation of the cover 100.

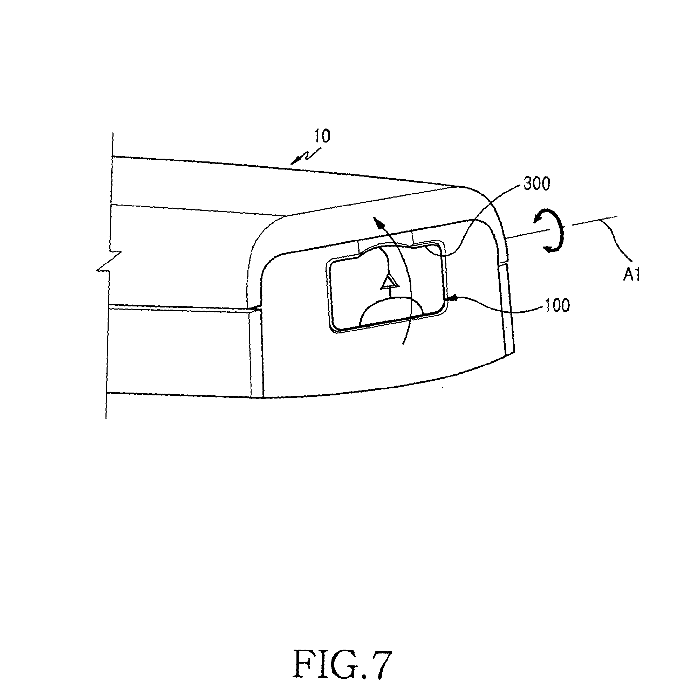

As shown in FIGS. 6 and 7, the cover 100 has a knob 101, which is protruded outward from the cover 100, by which the cover 100 can be easily rotated when an external force is applied to the knob 101. The knob 101 is constantly exposed to the external environment.

As shown in FIG. 6, the side hinge arm 200 includes said hinge protrusion 201 and a guide groove 202. The hinge protrusion 201 is formed at the sidewall of the side hinge arm 200 while being protruded in the longitudinal direction of the cover 100 such that the hinge protrusion 201 can be inserted through the rotation hole 301 a. The guide groove 202 is formed adjacent to the hinge protrusion 201 such that the guide protrusion 301 b is engaged in the guide groove 202. The guide protrusion 301 b is guided along the guide groove 202 as the cover 100 is rotated. The rotation of the cover 100 is restricted by the guide groove 202. The guide groove 202 is curved to guide the rotation of the cover 100.

As shown in FIG 6, the guide groove 202 is provided at the inside thereof with a stopper groove 202a to stop the rotation of the cover 100. The stopper groove 202a includes first and second stopper grooves 203 and 204. The first stopper groove 203 is formed at one end of the inside of the guide groove 202 such that the guide protrusion 301 b is engaged in the first stopper groove 203 for maintaining the opening of the cover 100 when the cover 100 is rotated open. The second stopper groove 204 is formed at the other end of the inside of the guide groove 202 such that the guide protrusion 301 b is engaged in the second stopper groove 204 for maintaining the closing of the cover 100 when the cover 100 is rotated closed. The first and second stopper grooves are each formed in the shape of a ring. Preferably, the end of the guide protrusion 301 b is rounded such that the guide protrusion 301 b can be easily engaged into or disengaged from the stopper groove 202a.

The operation of the interface connector cover opening and closing apparatus for mobile communication terminals with the above-stated construction according to the preferred embodiment of the present invention will now be described in detail with reference to FIGS. 4 to 15.

As shown in FIGS. 4 and 5, the mounting hole 300 is formed at a predetermined position of the lower end of the terminal body 10 such that the mounting hole 300 is opened or closed by the rotation of the cover 100.

As shown in FIG. 5, the cover mounting part 301 is formed at either end of the inside of the mounting hole 300 such that the cover mounting part 301 is rotatably connected to the side hinge arm 200 for guiding the rotation of the cover 100.

The rotation hole 301a is formed at the cover mounting part 301 such that the hinge protrusion 201 formed at the side hinge arm 200 is rotatably inserted through the rotation hole 301 a.

The guide protrusion 301 b is formed adjacent to the rotation hole 301 a for guiding the rotation of the cover 100. The guide protrusion 301 b is engaged in the guide groove 202 formed at the sidewall of the side hinge arm 200.

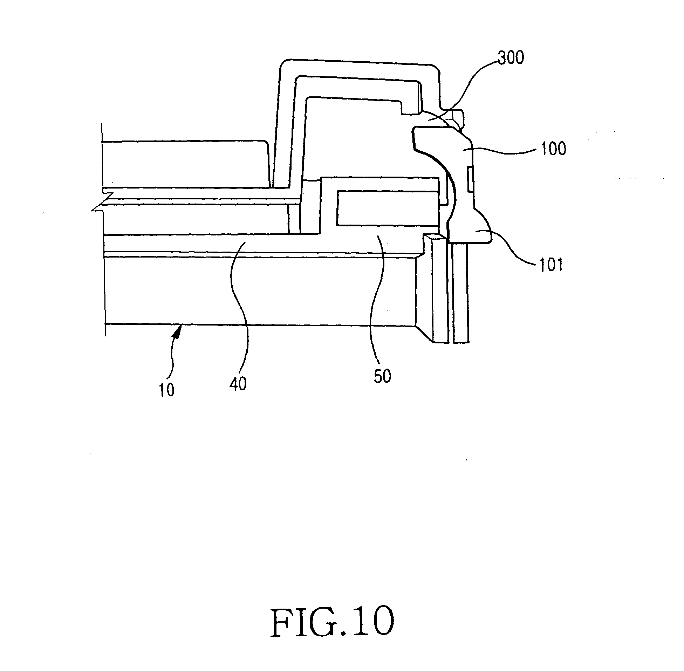

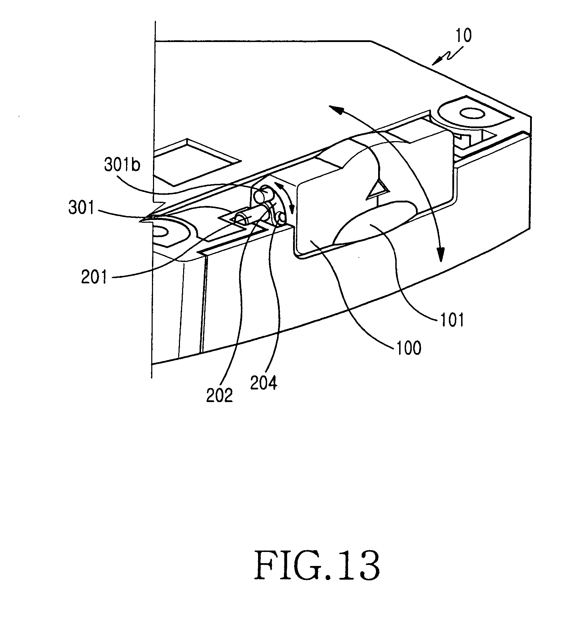

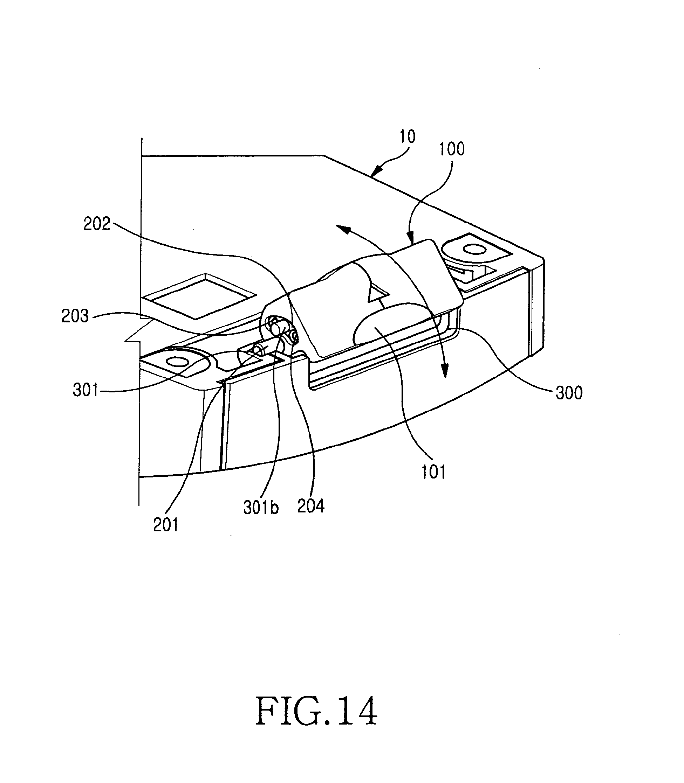

When the knob 101 protruded from the cover 100 is moved upward, for example, by a fingernail of a user, as shown in FIGS. 7 to 9, the cover 100 is rotated about the hinge axis A1 of the side hinge arm 200. As a result, the cover 100 is retracted into the inside of the mounting hole 300, which is shown in FIGS. 10 to 12. At the same time, the guide protrusion 301 b of the cover mounting part 301 is guided along the guide groove 202, as shown in FIGS. 13 and 14.

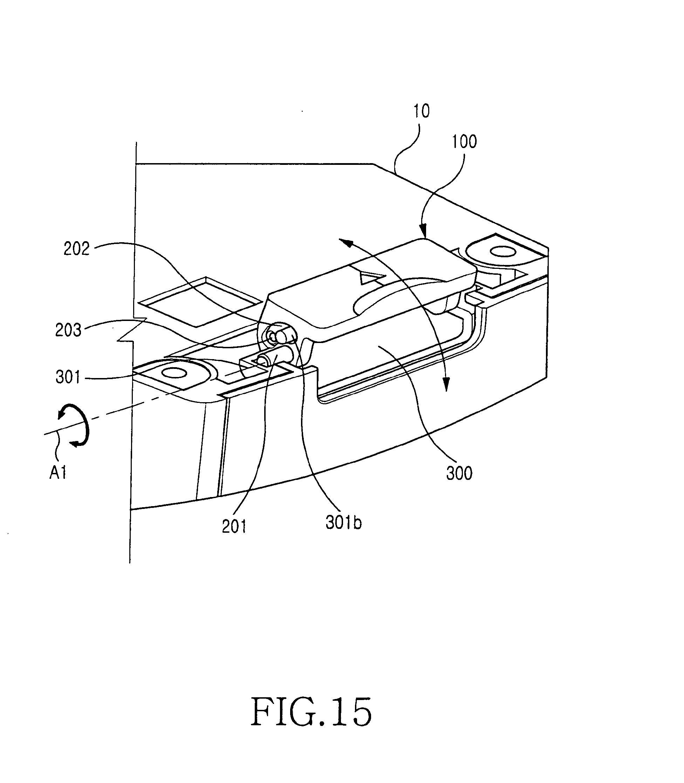

As shown in FIGS. 14 and 15, the guide groove 202 is curved such that the cover 100 can be rotated. Consequently, the guide protrusion 301 b is guided along the curved line of the guide groove 202.

The guide protrusion 301 b is engaged into the first stopper groove 203 formed at one end of the inside of the guide groove 202, as shown in FIG. 15, and, the mounting hole 300 is opened.

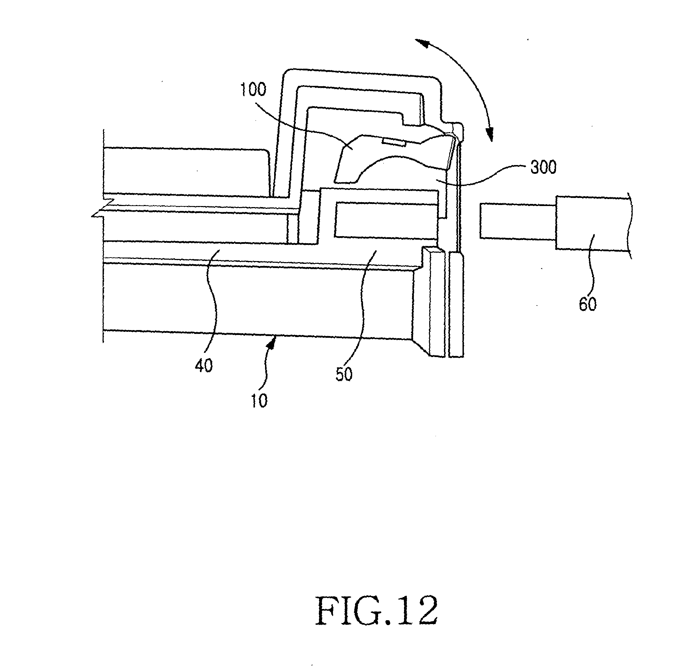

As shown in FIG. 12, the interface connector 50 is disposed on the printed circuit board 40 in the terminal body 10 while being electrically connected to the printed circuit board 40. Consequently, the external connector 60 can be electrically coupled to the interface connector 50 through the mounting hole 300. The external connector 60 is separated from the mounting hole 300 when the cover 100 is to be closed. When the knob 101 of the cover 100 is pushed downward, for example, by the fingemail of the user, as shown in FIG. 15, the cover 100 is rotated in the opposite direction about the hinge axis A1 such that the cover 100 is returned to its original position. At this time, the mounting hole 300 is closed by the cover 100.

As shown in FIG. 13, the guide protrusion 301 b of the cover mounting part 301 is rotated in the opposite direction along the guide groove 202, and is then engaged into the second stopper groove 204 formed at the other end of the inside of the guide groove 202 for maintaining the closing of the cover 100.

As apparent from the above description, the present invention provides an interface connector cover opening and closing apparatus for mobile communication terminals that allows easy rotation of an interface connector cover mounted to a terminal body of a mobile communication terminal. Consequently, the present invention has the effect of performing easy opening and closing of the interface connector cover.

Although the preferred embodiment of the present invention has been disclosed for illustrative purposes, those skilled in the art will appreciate that various modifications, additions and substitutions are possible, without departing from the scope of the invention as disclosed in the accompanying claims.

For example, the present invention is not limited to the above-described folder-type mobile communication terminal but suitably applied to any portable communication devices.

## Claims

1. An interface connector cover device (100, 300) for a mobile communication terminal (10) comprises:
a cover (100) disposed on the terminal body (10), the cover being rotatable about a hinge axis (A1) to an open and closed position, and
at least one cover opening and closing unit (200, 301) disposed at a rear of the cover (100) for rotatably connecting the cover to the terminal body and restricting rotation of the cover in particular to a predetermined angular displacement, the cover opening and closing unit (200, 301) providing the hinge axis (A1).

2. The interface connector cover device according to claim 1, wherein the mobile communication terminal further comprises:
an interface connector (50) disposed on a printed circuit board (40) in said terminal body while being electrically connected to the printed circuit board.

3. The interface connector cover device according to claim 1 or 2, wherein said cover (100) is disposed at a predetermined position of the terminal body and is rotatable about said hinge axis (A1) when an external force is applied to the cover, to retract the cover into the inside of the terminal body and to return it to its original position.

4. The interface connector cover device according to one of the previous claims, wherein it further comprises a mounting hole (300) formed at a predetermined position of the terminal body (10), wherein the mounting hole is opened and closed by rotation of the cover (100).

5. The interface connector cover device according to one of the previous claims, wherein the cover opening and closing unit (200, 301) comprises:
a cover mounting part (301) formed at at least one end of the inside of the mounting hole (300), and
a side hinge arm (200) formed at at least one end of the rear of the cover (100), wherein the side hinge arm (200) is rotatably connected to the cover mounting part (301) for restricting rotation of the cover.

6. The interface connector cover device according to claim 5, wherein the cover mounting part (301) is provided with a rotation hole (301 a) for allowing a hinge protrusion (201) formed at the side hinge arm (200) to be rotatably inserted therethrough, and the cover mounting part (301) is also provided with a guide protrusion (301 b), the guide protrusion being formed adjacent to the rotation hole (301 a) for guiding rotation of the cover (100).

7. The interface connector cover device according to one of the previous claims, wherein the cover (100) is provided with a knob (101) protruding outward from the cover.

8. The interface connector cover device according to claim 6, wherein the side hinge arm (200) comprises:
said hinge protrusion (201) formed at the sidewall of the side hinge arm protruding in a longitudinal direction of the cover (100), wherein the hinge protrusion is inserted through the rotation hole (301 a), and
a guide groove (202) formed adjacent to the hinge protrusion (201), wherein the guide protrusion (301 b) is engaged in the guide groove (202) for guiding the hinge protrusion when the cover is rotated, the rotation of the cover being restricted by the guide groove.

9. The interface connector cover device according to claim 8, wherein the guide groove (202) is curved.

10. The interface connector cover device according to claims 8 or 9, wherein the guide groove (202) is provided at an inside thereof with a stopper groove (202a) to stop rotation of the cover (100).

11. The interface connector cover device according to claim 10, wherein the stopper groove (202a) comprises:
a first stopper groove (203) formed at one end of the inside of the guide groove (202), wherein the guide protrusion (301 b) engages the first stopper groove (203) for maintaining the open position of the cover (100) when the cover is rotated open, and
a second stopper groove (204) formed at the other end of the inside of the guide groove (202), wherein the guide protrusion (301 b) engages the second stopper groove for maintaining the closed position of the cover (100) when the cover is rotated closed.

12. The interface connector cover device according to claim 11, wherein the first and second stopper grooves (203, 204) are both formed in the shape of a ring.

13. The interface connector cover device according to one of the claims 6 to 12, wherein an end of the guide protrusion (301 b) is rounded, such that the guide protrusion can engage and disengage the stopper groove (202a).

14. The interface connector cover device according to claim 8, wherein the guide groove (202) is provided with a stopper groove (202a) to stop rotation of the cover (100), wherein the stopper groove (202a) comprises:
a first stopper groove (203) formed at one end of the inside of the guide groove (202), wherein the guide protrusion (301 b) engages with the first stopper groove (203) for maintaining the open position of the cover when the cover is rotated open, and
a second stopper groove (204) formed at the other end of the inside of the guide groove (202), wherein the guide protrusion (301 b) engages with the second stopper groove (204) for maintaining the closed position of the cover when the cover (100) is rotated closed, wherein the first and second stopper grooves (203, 204) are formed in the shape of a ring, and the guide protrusion (301 b) is rounded so that it can engage and disengage the stopper groove (202a).
